(19) Europäisches Patentamt

European Patent Office

Office européen des brevets

(11) **EP 0 509 580 B1**

(12) **FASCICULE DE BREVET EUROPEEN**

(45) Date de publication et mention
de la délivrance du brevet:
**07.08.1996 Bulletin 1996/32**

(51) Int. Cl.$^6$: **B29C 55/00**

(21) Numéro de dépôt: **92200971.7**

(22) Date de dépôt: **04.04.1992**

(54) **Polymère cristallin assoupli et procédé pour sa production**

Weichgemachtes kristallines Polymer und Verfahren zu seiner Herstellung

Softened crystalline polymer and process for its production

(84) Etats contractants désignés:
**AT BE CH DE DK ES FR GB IT LI NL SE**

(30) Priorité: **19.04.1991 BE 9100363**

(43) Date de publication de la demande:
**21.10.1992 Bulletin 1992/43**

(73) Titulaire: **SOLVAY (Société Anonyme)**
**B-1050 Bruxelles (BE)**

(72) Inventeur: **Gilliard, Pierre**
**B-1020 Bruxelles (BE)**

(74) Mandataire: **Dufrasne, Eugène et al**
**Solvay S.A.,**
**Département Propriété Industrielle,**
**310, rue de Ransbeek**
**1120 Bruxelles (BE)**

(56) Documents cités:
**EP-A- 0 415 783**

## Description

La présente invention concerne un polymère cristallin assoupli ainsi que son procédé de production.

L'assouplissement des polymères cristallins en vue notamment de permettre la production d'articles réclamant une certaine souplesse s'obtient généralement par une action sur le plan chimique : action sur le taux de branchement court ou mélange avec des élastomères ou avec des plastifiants. De tels procédés se révèlent toutefois délicats et coûteux. Ainsi, par exemple, dans le domaine du polyéthylène, on produit actuellement une variété dénommée "VLDPE" qui se caractérise certes par une souplesse remarquable mais dont le prix de revient est élevé.

Le document EP 0415783 montre un polymère cristallin, sous forme de filaments thermoplastiques, orienté et assoupli, mais dont l'assouplissement est obtenu par une réduction de l'orientation, réalisée par modification structurelle de la partie extérieure des filaments. Selon ce document, il n'est donc malheureusement pas possible d'assouplir un polymère cristallin sans réduire en contrepartie son orientation.

Il a maintenant été trouvé qu'il est possible d'assouplir des polymères cristallins uniquement par des moyens physiques à savoir en orientant ces polymères dans des conditions déterminées qui seront précisées par la suite.

La présente invention concerne, dès lors, à titre principal un polymère cristallin orienté et assoupli en l'absence de tout adjuvant se caractérisant en ce qu'il présente un module de traction E, mesuré dans la direction d'étirage, compris entre 0,3 et 0,8 $E_0$, $E_0$ étant le module de traction du même polymère non orienté.

Le polymère cristallin orienté et assoupli conforme à l'invention est d'autant plus surprenant que l'on sait qu'une orientation moléculaire est réputée rendre les polymères plus rigides.

Le polymère cristallin orienté et assoupli selon l'invention peut être de nature quelconque mais on préfère généralement que celui-ci soit produit à partir d'au moins une oléfine.

Par polymère produit à partir d'au moins une oléfine, on entend désigner les homopolymères d'oléfines tels que notamment le polyéthylène ou le polypropylène ainsi que les copolymères contenant au moins 50 % en poids d'unités dérivées d'oléfines.

Le polymère cristallin orienté et assoupli conforme à l'invention convient particulièrement pour la production d'articles allongés tels que des joncs, des fibres, des films, des fils, etc... devant présenter une bonne souplesse.

L'invention concerne également un procédé simple et économique pour produire un tel polymère cristallin orienté et assoupli.

Selon l'invention, on obtient un tel polymère cristallin orienté et assoupli en étirant le polymère extrudé

- à un taux de déformation supérieur à 500 %,

- à une température comprise entre $T_f + 10°C$ et $T_f + 30°C$, $T_f$ étant la température de fusion du polymère, et

- sous un gradient de vitesse moyenne $\dot{\varepsilon}$ compris entre $1/20\tau$ et $10/\tau$, $\tau$ étant le temps de relaxation moyen du polymère à la température d'extrusion choisie et

- en refroidissant directement le polymère étiré à une température inférieure à sa température de cristallisation en un temps inférieur à 10 secondes.

Le temps de relaxation du polymère est défini par la relation :

$$\tau = \frac{2\,\eta o\,M_c}{\rho\,R\,T}$$

dans laquelle :

- $\eta o$ est la viscosité du polymère pour des gradients de vitesse tendant vers 0.
- $\rho$ est la masse volumique du polymère.
- $M_c$ est la masse moléculaire critique au-delà de laquelle $\eta o$ (pour le polymère monodispersé) est proportionnelle à la puissance 3,4 de la masse moléculaire.
- R et T sont la constante des gaz et la température.

Dans le procédé conforme à l'invention, le polymère doit être, de préférence, extrudé à une température excédant d'environ 20°C sa température de fusion. Si nécessaire, un échangeur thermique peut être placé à la sortie de l'extrudeuse pour amener le polymère à cette température.

L'étirage du polymère cristallin peut, au choix, être réalisé dans la filière d'extrusion, ou par passage de l'extrudat entre deux paires successives et rapprochées de cylindres tournant à des vitesses différentes. La demanderesse préfère en général que le taux de déformation, lors de cet étirage, soit nettement supérieur à 500 % et même supérieur à 1000 %.

Dans le procédé selon l'invention, le polymère étiré peut être refroidi rapidement à une température inférieure à sa température de cristallisation par tout moyen classique de réfrigération tel que par exemple, un passage sur un cylindre de réfrigération brusque. On préfère toutefois que ce refroidissement soit réalisé par passage en continu au travers d'un bain d'eau maintenue à une température inférieure à 30°C. En général, on préfère que la réfrigération soit réalisée en moins de 5 secondes et, de préférence, en moins de 2 secondes.

Selon un autre mode de réalisation du procédé selon l'invention, le polymère peut être extrudé sous forme d'une paraison et, dans ce cas, l'étirage est obtenu par soufflage d'un gaz dans la paraison.

Grâce au procédé selon l'invention, il est notamment possible d'obtenir des articles allongés à base de polyéthylènes de basse densité conventionnels présentant une souplesse analogue à des articles similaires produits à partir de polyéthylènes de très basse densité (VLDPE) ou à partir de polychlorure de vinyle plastifié.

Le procédé selon l'invention est, par ailleurs, explicité plus en détail dans les exemples de réalisation pratique qui vont suivre et dans lesquels l'exemple 3R, donné à titre comparatif, est exclu du cadre de la présente invention.

### Exemple 1

En utilisant une extrudeuse [D(diamètre):30 mm, L(longueur)/D:25, taux de compression 3] équipée d'un échangeur thermique et d'une filière capillaire de 2 mm de diamètre, de 2 cm de longueur et présentant un angle d'entrée de 90°, on extrude, à une température matière de 140°C, un polyéthylène basse densité (d=0,920) présentant un temps de relaxation moyen de 0,02 sec. La vitesse d'extrusion est de 10 m/min, le gradient de vitesse moyen dans le convergent vaut 30 sec$^{-1}$ et le taux de déformation s'élève à 20. Le jonc ainsi extrudé est passé ensuite au travers d'un bain d'eau à 15°C situé à environ 5 cm de la sortie de la filière.

Le produit ainsi obtenu présente un module de traction sécant à 2 % de déformation qui s'élève à 70 MPa (le module étant mesuré sur un jonc de 100 mm de long et à une vitesse de traction de 10 mm/min).

A titre comparatif, le module de traction mesuré dans les mêmes conditions sur des joncs non orientés étirés en fondu (gradient de vitesse < 1/200$\tau$) et refroidis lentement obtenus à partir du même polymère s'élève à 150 MPa. Il apparaît donc que le jonc orienté obtenu selon le procédé de l'invention présente un module de traction réduit d'environ 50 %.

### Exemple 2

On opère comme dans l'exemple 1 mais en choisissant une température d'extrusion de 150°C et en mettant en oeuvre un polyéthylène de haute densité (d=0,950) ayant un temps de relaxation de 0,1 sec, la vitesse d'extrusion s'élevant à 3 m/min.

Le produit ainsi obtenu présente un module de traction, mesuré comme dans l'exemple 1, s'élévant à 440 MPa.

A titre comparatif, le module de traction mesuré dans les mêmes conditions sur des joncs non orientés étirés en fondu (gradient de vitesse < 1/200$\tau$) et refroidis lentement obtenus à partir du même polymère s'élève, par contre, à 1000 MPa. Il apparaît une nouvelle fois que le jonc orienté produit selon le procédé de l'invention présente un module de traction réduit d'environ 50 %.

### Exemple 3R

On opère comme dans l'exemple 1 mis à part que la vitesse d'extrusion est réduite à 10 cm/min de façon à imposer un gradient de vitesse de 0,3 sec$^{-1}$ situé en dehors de la zone revendiquée.

Le produit ainsi obtenu présente un module de traction, mesuré comme dans l'exemple 1, s'élevant à 140 MPa. Il apparaît donc que ce produit présente un module comparable à celui d'un produit non orienté (cf exemple 1).

### Exemple 4

On opère comme dans l'exemple 1 mis à part que la distance séparant la filière de l'entrée du bain de refroidissement est portée à 100 cm (temps de refroidissement > 5 sec). Le module en traction du jonc obtenu, mesuré comme dans l'exemple 1, s'élève dans ce cas à 110 MPa. On constate donc que le produit ainsi obtenu, bien que satisfaisant, est moins souple que celui obtenu selon l'exemple 1. Cet exemple montre, dès lors, l'intérêt d'une réfrigération rapide du produit étiré.

### Exemple 5

Le polymère de l'exemple 1 est traité sur une extrudeuse (D:45, L/D:20, taux de compression 3) équipée d'une filière plate [e(épaisseur):4 mm] maintenue à 140°C. Les vitesses de déformation dans la filière sont négligeables et le film ainsi produit est très faiblement orienté au sortir de la filière. Ce film, débité à une vitesse de 1 m/min est ensuite fortement étiré entre deux paires de rouleaux presseurs sur une distance de 10 cm (gradient de vitesse moyen = 5 sec$^{-1}$). A sa sortie de la seconde paire de rouleaux, le film est animé d'une vitesse de 20 m/min et présente une épaisseur de 0,5 mm. Le film est ensuite directement plongé dans un bain d'eau analogue à celui utilisé selon l'exemple 1.

Le module de traction de ce film, mesuré sur une éprouvette selon la norme DIN 53457, dans les conditions de l'exemple 1, s'élève à 90 MPa.

Le module de traction mesuré dans les mêmes conditions sur une éprouvette découpée dans un film extrudé à 200°C à partir du même polymère, étiré en fondu à un gradient de vitesse < 1/200 et refroidi lentement à l'air s'élève à 190 MPa. On constate donc, une fois encore, que le film produit selon le procédé de l'invention présente un module de traction réduit d'environ 50 %.

### Revendications

1. Polymère cristallin orienté et assoupli en l'absence de tout adjuvant plastifiant caractérisé en ce qu'il présente un module de traction E , mesuré dans la direction d'étirage, compris entre 0,3 et 0,8 $E_0$ , $E_0$ étant le module de traction du même polymère non orienté.

2. Polymère cristallin selon la revendication 1 caractérisé en ce qu'il est produit à partir d'au moins une oléfine.

3. Procédé pour produire un polymère cristallin orienté et assoupli selon la revendication 1 ou 2 caractérisé en ce que : on étire le polymère extrudé

- à un taux de déformation supérieur à 500 %,
- à une température comprise entre Tf + 10°C et Tf + 30°C, Tf étant la température de fusion du polymère, et
- sous un gradient de vitesse moyenne $\dot{\varepsilon}$ compris entre $1/20\tau$ et $10/\tau$, $\tau$ étant le temps de relaxation moyen du polymère à la température d'extrusion choisie et en ce que :

on refroidit le polymère étiré à une température inférieure à sa température de cristallisation en un temps inférieur à 10 secondes.

4. Procédé selon la revendication 3 caractérisé en ce qu'on extrude le polymère à une température supérieure d'au plus 20°C à sa température de fusion.

5. Procédé selon la revendication 3 caractérisé en ce que l'étirage est réalisé dans la filière d'extrusion.

6. Procédé selon la revendication 3 caractérisé en ce que l'étirage est réalisé par passage de l'extrudat entre deux paires successives de cylindres tournant à des vitesses différentes.

7. Procédé selon la revendication 3 caractérisé en ce que le polymère est extrudé sous forme d'une paraison et en ce que l'étirage est obtenu par soufflage d'un gaz dans la paraison.

8. Procédé selon la revendication 3 caractérisé en ce que le polymère étiré est directement refroidi à une température inférieure à sa température de cristallisation en un temps inférieur à 5 secondes.

9. Procédé selon la revendication 7 caractérisé en ce que le polymère est refroidi par passage en continu au travers d'un bain d'eau maintenu à une température inférieure à 30°C.

10. Procédé selon la revendication 7 caractérisé en ce que le polymère est refroidi par passage sur un cylindre de réfrigération brusque.

## Claims

1. Oriented crystalline polymer which is pliable in the absence of any plasticising adjuvant, characterised in that it exhibits a tensile modulus E, measured in the drawing direction, of between 0.3 and 0.8 $E_0$, $E_0$ being the tensile modulus of the same polymer, unoriented.

2. Crystalline polymer according to Claim 1, characterised in that it is produced from at least one olefin.

3. Process for producing an oriented and pliable crystalline polymer according to Claim 1 or 2, characterised in that:
the extruded polymer is drawn

- to a deformation ratio higher than 500%,
- at a temperature of between $T_m$ + 10°C and $T_m$ + 30°C, $T_m$ being the melting temperature of the polymer, and
- at a mean velocity gradient $\varepsilon$ of between $1/20\tau$ and $10/\tau$, $\tau$ being the mean relaxation time of the polymer at the chosen extrusion temperature, and in that:

the drawn polymer is cooled to a temperature below its crystallisation temperature in a time of less than 10 seconds.

4. Process according to Claim 3, characterised in that the polymer is extruded at a temperature which is at most 20°C higher than its melting temperature.

5. Process according to Claim 3, characterised in that the drawing is performed in the extrusion die.

6. Process according to Claim 3, characterised in that the drawing is performed by passing the extrudate between two successive pairs of rolls rotating at different speeds.

7. Process according to Claim 3, characterised in that the polymer is extruded in the form of a parison and in that the drawing is obtained by blowing a gas into the parison.

8. Process according to Claim 3, characterised in that the drawn polymer is cooled directly to a temperature below its crystallisation temperature in a time of less than 5 seconds.

9. Process according to Claim 7, characterised in that the polymer is cooled by being continuously passed through a water bath maintained at a temperature below 30°C.

10. Process according to Claim 7, characterised in that the polymer is cooled by being passed over a sudden-chill roll.

## Patentansprüche

1. Kristallines Polymer, das ohne irgendeinen Weichmacherzusatz orientiert und weichgemacht wird, dadurch gekennzeichnet, daß es einen Zugelastizitätsmodul E, gemessen in Streckrichtung, zwichen 0,3 und 0,8 $E_0$ aufweist, wobei $E_0$ der Zugelastizitätsmodul des selben, nicht orientierten Polymers ist.

2. Kristallines Polymer gemäß Anspruch 1, dadurch gekennzeichnet, daß es aus wenigstens einem Olefin hergestellt wird.

3. Verfahren zur Herstellung eines orientierten und weichgemachten kristallinen Polymers gemäß Anspruch 1, dadurch gekennzeichnet, daß: man das extrudierte Polymer

- auf einen Deformationsgrad von größer als 500%,
- bei einer Temperatur zwischen Tf + 10 °C und Tf + 30 °C, wobei Tf die Schmelztemperatur des Polymers ist, und
- unter einem mittleren Geschwindigkeitsgradienten $\dot{\varepsilon}$ zwischen $1/20\tau$ und $10/\tau$, wobei $\tau$ die mittlere Relaxationszeit des Polymers bei der gewählten Extrusionstemperatur ist, reckt und dadurch, daß:

man das gereckte Polymer innerhalb einer Zeit von weniger als 10 Sekunden auf eine Temperatur abkühlt, die niedriger als seine Kristallisationstemperatur ist.

4. Verfahren gemäß Anspruch 3, dadurch gekennzeichnet, daß man das Polymer bei einer Temperatur extrudiert, die höchstens 20 °C höher als seine Schmelztemperatur ist.

5. Verfahren gemäß Anspruch 3, dadurch gekennzeichnet, daß das Recken in der Extrusionsdüse durchgeführt wird.

6. Verfahren gemäß Anspruch 3, dadurch gekennzeichnet, daß das Recken mittels Durchgang des Extrudats zwischen zwei aufeinanderfolgenden Zylinderpaaren, die sich mit verschiedenen Geschwindigkeiten drehen, durchgeführt wird.

7. Verfahren gemäß Anspruch 3, dadurch gekennzeichnet, daß das Polymer in Form eines Vorformlings extrudiert wird, und dadurch, daß durch Einblasen eines Gases in den Vorformling gereckt wird.

8. Verfahren gemäß Anspruch 3, dadurch gekennzeichnet, daß das gereckte Polymer innerhalb einer Zeit von weniger als 5 Sekunden direkt auf eine Temperatur abgekühlt wird, die niedriger als seine Kristallisationstemperatur ist.

9. Verfahren gemäß Anspruch 7, dadurch gekennzeichnet, daß das Polymer mittels kontinuierlichem Durchgang durch ein auf eine Temperatur unterhalb von 30 °C gehaltenes Wasserbad abgekühlt wird.

10. Verfahren gemäß Anspruch 7, dadurch gekennzeichnet, daß das Polymer mittels Durchgang über eine Sofortabkühlwalze abgekühlt wird.